# EUROPÄISCHE PATENTANMELDUNG

(11) **EP 1 978 266 A2**
(43) Veröffentlichungstag der Anmeldung: **08.10.2008**
(21) Anmeldenummer: 08006070.0
(22) Anmeldetag: 28.03.2008
(51) Int. Cl.: F16C 7/06

(54) **Axial verstellbare Stellstange mit Schraubengewinde und verdrehbarem Mutterstück**

(30) Priorität: 05.04.2007 DE 102007016529
(71) Anmelder: EJOT GmbH & Co. KG, 57334 Bad Laasphe (DE)
(72) Erfinder: Eck, Gunnar, 99897 Tambach-Dietharz (DE); Gollhardt, Jochen, 99897 Tambach-Dietharz (DE)
(74) Vertreter: Bardehle, Heinz

(57) **Zusammenfassung**

Die Erfindung bezieht sich auf eine axial verschiebbare Stellstange (3) mit einem Schraubengewinde (4), das derart ein verdrehbares, von einem Gehäuse (1) umfasstes Mutterstück (2) durchsetzt, dass bei Drehung des Mutterstücks (2) die Stellstange (3) gegenüber dem Gehäuse (1) axial im Bereich zwischen zwei Anschlägen (16,6;9,6) verschoben wird, von denen der eine durch einen Bund (13) an der Stellstange gebildet ist, der gegen eine vom Gehäuse gebildete Außenseite einer Umfassung (6) der Stellstange in Anlage bringbar ist. Der andere Anschlag ist durch von der Stellstange radial abstehende Rastfedern (9) gebildet, die gegen die Innenseite der Umfassung (6) in Anlage bringbar sind.

## Beschreibung

Die Erfindung bezieht sich auf eine axial verschiebbare Stellstange mit einem Schraubengewinde, das derart ein verdrehbares, von einem Gehäuse umfasstes Mutterstück durchsetzt, dass bei Drehung des Mutterstücks die Stellstange gegenüber dem Gehäuse axial im Bereich zwischen zwei Anschlägen verschoben wird, von denen der eine durch einen Bund an der Stellstange gebildet ist, der gegen eine vom Gehäuse gebildete Außenseite einer Umfassung der Stellstange in Anlage bringbar ist.

Derartige Stellstangen werden dazu benutzt, eine gewünschte Position längs einer Axialrichtung herbeizuführen, um damit irgendein Element einer Apparatur in gewünschter Weise zu verstellen, wozu das Mutterstück entsprechend verdreht wird, was beispielsweise durch einen elektrisch angetriebenen Motor geschehen kann. Hierfür gibt es viele Anwendungen, mit denen, gesteuert über das verdrehbare Mutterstück, bestimmte Axialstellungen der Stellstange herbeigeführt werden können, durch die dann an einer von der steuernden Position entfernten Stelle eine Axialverschiebung einer Stellstange für irgendeine Manipulation in einem elektrischen Gerät herbeigeführt wird.

Bekannte Einstellmechanismen, die eine Stellstange benutzen, benötigen für die Gestaltung des oben erwähnten Anschlages eine auf die Stellstange nachträglich aufgesetzte Scheibe, die in der betreffenden Extremlage der Stellstange gegen einen Teil des die Stellstange umfassenden Gehäuses aufläuft, wobei wegen der Übersetzung von verdrehbarem Mutterstück und Gewinde der Stellstange im Extremfall erhebliche Kräfte auftreten können, durch die eine solche Scheibe aus ihrer Verankerung an der Stellstange gelöst wird, womit das gesamte Einstellsystem nicht mehr funktionieren würde.

Der Erfindung liegt daher die Aufgabe zugrunde, die Stellstange mit ihren Anschlägen in Bezug auf das die Stellstange umgebende Gehäuse so zu gestalten, dass die Stellstange in ihren beiden Endpositionen sicher angehalten werden kann, ohne dass dabei der eine oder andere Anschlag überlastet wird.

Hierzu wird die Stellstange erfindungsgemäß so gestaltet, dass der andere Anschlag durch von der Stellstange radial abstehende Rastfedern gebildet ist, die gegen die Innenseite der Umfassung in Anlage bringbar sind.

Dieser andere Anschlag, gestaltet von den von der Stellstange radial abstehenden Rastfedern, gewährleistet eine sichere Belastbarkeit dieses Anschlages, der außerdem durch die Zusammenfassung von Stellstange und Rastfedern ein geschlossenes Bauteil bildet, das sich auch leicht herstellen lässt, insbesondere durch Umspritzen der Stellstange mit einem die Anschläge bildenden Kunststoff. Aufgrund dieser Gestaltung kann die Stellstange bei entsprechender Verdrehung des Mutterstücks an dem einen Anschlag, gebildet durch den Bund an der Stellstange gegenüber der vom Gehäuse gebildeten Umfassung der Stellstange, sicher und stabil angehalten werden, während der andere Anschlag durch an die Stellstange andrückbare Rastfedern gebildet wird, die bei entsprechender Verschiebung der Stellstange gegen die Innenseite der durch das Gehäuse gebildeten Umfassung anlaufen, wo sie mit erheblicher Sicherheit festgehalten werden können, so dass die Stellstange mit großer mechanischer Sicherheit zwischen ihren beiden durch die beiden Anschläge definierten Endstellungen bewegt werden kann.

Zweckmäßig bildet man die Anschläge als Bestandteile einer die Stellstange umfassenden und mit dieser fest verbundenen Hülse aus. Dabei kann die Hülse auf der Stellstange fest aufgeschrumpft sein, womit sich zwischen Stellstange und Hülse eine besonders feste Verbindung ergibt.

Die Rastfedern, die mit der Innenseite der Umfassung den einen Anschlag bilden, versieht man zweckmäßig mit einer gegen die Innenseite der Umfassung auflaufenden Fläche, die derart gestaltet ist, dass die Rastfedern beim Auflaufen in ihrer radial nach außen weisenden Lage gehalten werden. Hierdurch wird sichergestellt, dass die Rastfedern bei starker Belastung nicht nach innen zu weggedrückt werden, womit die betreffende Endstellung der Stellstange überlaufen werden würde. Es ist aber auch möglich, die Rastfedern als Haken auszubilden, die dann in einen axialen Vorsprung greifen, der an der Umfassung angebracht ist. Beim Auflaufen der Rastfedern verhaken sich diese an dem axialen Vorsprung, so dass sie bei besonders starkem axialen Druck nicht nach innen ausweichen können.

Eine besondere Sicherung der Rastfedern gegen ein Ausweichen nach innen beim Auflaufen der Rastfedern gegen die Innenseite der Umfassung lässt sich in günstiger Weise dadurch herbeiführen, dass auf die Stellstange ein Ring aufgesetzt ist, der sich beim Auflaufen der Rastfedern gegen die Innenseite der Umfassung hinter die Rastfedern setzt. Der Ring wird nach der im Allgemeinen durch Spritzen erfolgenden Herstellung der Stellstange über deren Gewindeteil in den Bereich geschoben, wo er unter den Rastfedern liegt, und zwar in einer Position, in der sich die Enden der Rastfedern nach innen zu gegen den Ring abstützen können. Hierdurch wird ein unerwünschtes Zusammendrücken der Rastfedern bei mehr oder minder gewaltsamen Herausziehen der Stellstange aus der Umfassung verhindert, dass die Rastfedern nachgeben können, so dass durch den Ring der Zusammenbau von Stellstange und Umfassung gesichert ist.

Um der Stellstange gegenüber dem Gehäuse eine Verdrehsicherung zu geben, versieht man die Hülse zweckmäßig mit einem Längssteg, der zur Verdrehsicherung in eine Ausnehmung in der Umfassung passt. Bei der Verschiebung der Stellstange gegenüber dem Gehäuse und damit gegenüber der Umfassung gleitet dann der Längssteg in der Ausnehmung und hält somit in jeder Lage der Stellstange diese in Verdrehrichtung gegenüber dem Gehäuse fest.

In den Figuren sind Ausführungsbeispiele der Erfindung dargestellt. Es zeigen:
- Figur 1: die Stellstange mit im Schnitt gezeichnetem Gehäuse und den beiden Anschlägen;
- Figur 2: die beiden in Figur 1 dargestellten Teile, wobei die Stellstange vor ihrem Einsetzen in das Gehäuse dargestellt ist;
- Figur 3: die Anordnung gemäß Figur 1 in einer Lage dicht vor dem durch die Außenseite der Umfassung gebildeten Anschlag;
- Figur 4: die Anordnung gemäß Figur 1 in einer Lage dicht vor dem durch die Innenseite der Umfassung gebildeten Anschlag;
- Figur 5: die Gestaltung der Rastfedern mit schrägen Flächen;
- Figur 6: die Gestaltung der Rastfedern nach Art eines Hakens;
- Figur 7: die Stellstange mit dem Schnitt gezeichneten Gehäuse und einem aufgesetzten Ring im Bereich des gewindefreien Teils der Stellstange;
- Figur 8: die gleiche Anordnung wie dargestellt in Figur 7, jedoch mit unter die Rastfedern eingerastetem Ring.

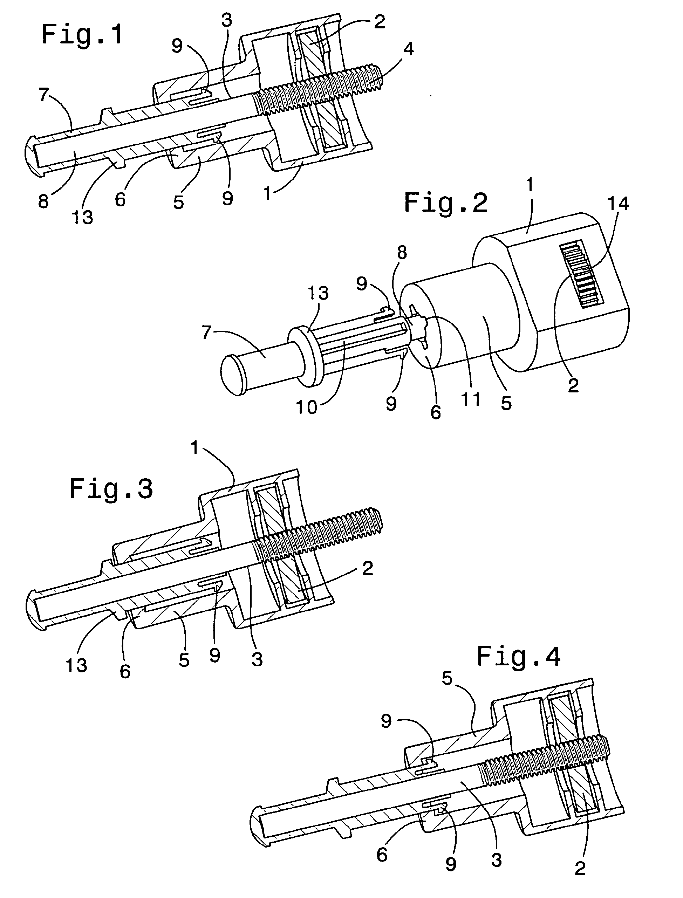

Die in der Figur 1 im Schnitt dargestellte Stellstangenanordnung besteht aus dem Gehäuse 1, in dem das drehbar gelagerte Mutterstück 2 untergebracht ist. In das Gewinde des Mutterstücks 2 greift die Stellstange 3 mit ihrem Gewindeteil 4 ein.

Das Gehäuse 1 setzt sich in das Zylinderteil 5 fort, das eine Umfassung 6 für die Stellstange 3 mit einer von ihr getragenen Hülse 7 einschließt. Die Hülse 7 ist durch Umspritzen mit dem zylindrischen Teil 8 der Stellstange 3 fest verbunden. Die Hülse 7 geht an ihrer dem Gewindeteil 4 zugewandten Seite in mehrere Rastfedern 9 über, die im Zylinderteil 5 axial frei beweglich sind.

Bei einer weiter unten im Zusammenhang mit der Figur 2 beschriebenen Verdrehung des Mutterstücks 2 wird das Gewindeteil 4 entsprechend axial verschoben, wobei vorausgesetzt ist, dass die Stellstange 3 in dem Gehäuse 1 gegen Verdrehung gesichert untergebracht ist, worauf im Zusammenhang mit der Figur 2 näher eingegangen wird.

Figur 2 zeigt die Anordnung gemäß Figur 1 ungeschnitten, und zwar bei aus dem Gehäuse 1 teilweise herausgezogenem zylindrischen Teil 8 der Stellstange 3. An der Hülse 7 sind die Rastfedern 9 angebracht, die hier außerhalb des Zylinderteils 5 liegen und in dieses dadurch einschiebbar sind, dass die Rastfedern nach innen zu in Richtung auf den zylindrischen Teil 8 eindrückbar sind. Die Hülse 7 weist darüber hinaus den Längssteg 10 auf, der in eine entsprechende Ausnehmung 11 an einer Umfassung 6 des Zylinderteils 5 passt und bei in das Gehäuse 1 eingeschobener Stellstange 3 eine Verdrehsicherung der Stellstange 3 gegenüber dem Gehäuse 1 bildet. Die Hülse 7 bildet weiterhin den Bund 13, der, wie im Zusammenhang mit der Figur 3 näher erläutert, als der eine Anschlag der Anordnung dient. In das Gehäuse 1 ist außerdem das Mutterstück 2 gelagert, das an seiner Außenkontor mit einer Verzahnung 14 versehen ist, in die ein Gegenzahnrad eingreifen kann, um mit einem derartigen Mechanismus über das Mutterstück 2 und dessen Verzahnung 14 bei seiner Verdrehung die Stellstange 3 axial hin und her zu bewegen. Das in die Verzahnung 14 eingreifende Gegenzahnrad ist in der Figur 2 nicht dargestellt, da es auf deren Gestaltung in diesem Zusammenhang nicht ankommt.

In der Figur 3 ist die Anordnung gemäß Figur 1 wiederum im Schnitt dargestellt, und zwar in einer Lage, in der der Bund 13 dicht vor der Umfassung 6 an dem Zylinderteil 5 steht. Bei entsprechender Verdrehung des Mutterstücks 2 und daraus resultierender Axialverschiebung der Stellstange 3 kann sich der Bund 13 noch geringfügig an die Umfassung 6 annähern, bis der Bund 13 gegen die Umfassung 6 anschlägt, womit der äußere Anschlag gebildet ist und eine weitere Axialverschiebung der Stellstange 3 verhindert.

In der Figur 4 ist die gleiche Anordnung dargestellt, allerdings in einer Lage, in der die Rastfedern 9 im inneren Bereich des Zylinderteils 5 dicht vor der Umfassung 6 stehen. Bei entsprechend weiterer Verdrehung des Mutterstücks 2 könnte sich die Stellstange 3 noch ein kurzes Stück bis zu der Innenseite der Umfassung 6 bewegen, womit der zweite Anschlag für die Bewegung der Stellstange 3 zur Wirkung kommen würde.

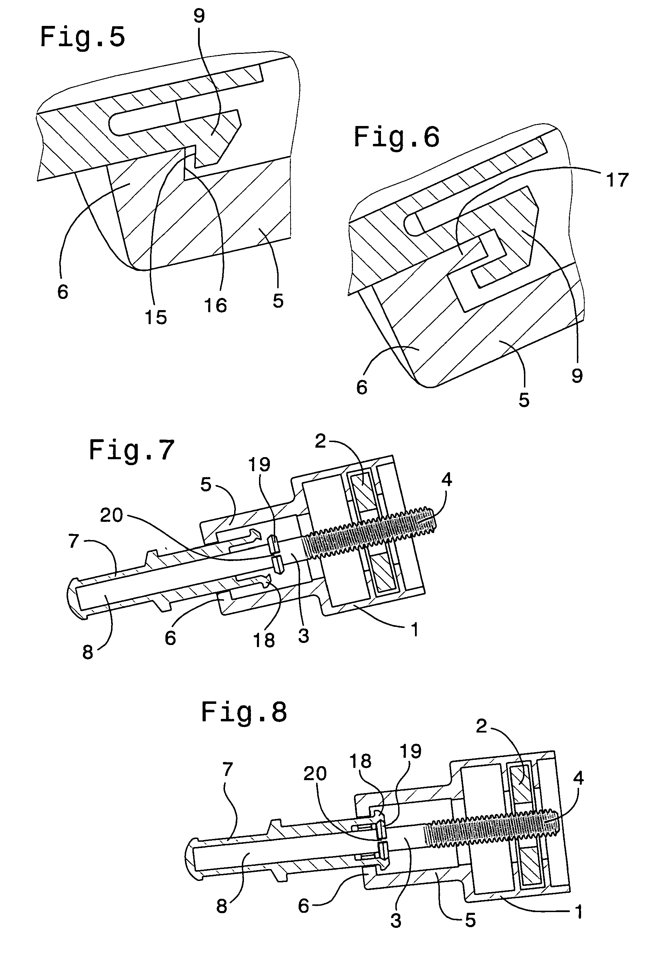

In den Figuren 5 und 6 sind zwei Ausführungsformen für die Rastfedern dargestellt, durch die dafür gesorgt wird, dass bei besonders hoher axialer Krafteinwirkung auf die Rastfedern 9 diese nicht nach innen zu abgleiten können und damit den betreffenden Anschlag freigeben würden. Gemäß Figur 5 geschieht dies dadurch, dass die Rastfedern mit ihrer der Umfassung 6 zugewandten Seite 15 eine Schräglage besitzen, die zu einer entsprechenden Schräge 16 an der Umfassung 6 passt, wodurch bei einem Zug auf die Rastfedern 9 in Richtung aus dem Zylinderteil 5 hinaus die Rastfedern nach außen gezogen werden und damit der Anschlag in seiner Wirkung gesichert wird.

Eine andere Art der Sicherung des Anschlages ist in der Figur 6 dargestellt. Die Rastfeder 9 ist hier als Haken ausgebildet, in den der axiale Vorsprung 17 an der Umfassung 6 eingreift, so dass bei einem nach außen weisenden Zug auf die Rastfeder 9 der Haken nicht die Rastfeder 9 nach innen zu freigeben kann und somit der betreffende Anschlag ebenfalls gesichert ist.

In der Figur 7 ist die Anordnung gemäß Figur 1 dargestellt, wobei zusätzlich auf die Stellstange 3 der Ring 19 aufgeschoben ist. Der Ring besitzt eine nach innen gerichtete Federspannung, so dass er nicht lose auf der Stellstange sitzt, sondern auf dieser axial verschoben werden kann. Zu diesem Zweck ist der Ring 19 mit einem Schlitz 20 versehen. Aus der in Figur 7 dargestellten Position des Ringes 19 wird dieser dann in den Bereich der Rastfedern 18 verschoben, und zwar so, dass er in eine entsprechende ringartige Ausnehmung der Rastfedern 18 einrastet, womit diese dann an einem radialen Ausweichen nach innen durch den Ring gehindert sind.

Figur 8 zeigt die gleiche Anordnung wie Figur 7, allerdings mit unter die Rastfedern 18 geschobenem Ring 19, und zwar in der Endlage der Stellstange 3, in der die Rastfedern 18 unmittelbar vor der Umfassung 6 stehen.

## Patentansprüche

1. Axial verschiebbare Stellstange (3) mit einem Schraubengewinde (4), das derart ein verdrehbares, von einem Gehäuse (1) umfasstes Mutterstück (2) durchsetzt, dass bei Drehung des Mutterstücks (2) die Stellstange (3) gegenüber dem Gehäuse (1) axial im Bereich zwischen zwei Anschlägen (13, 6; 9, 6) verschoben wird, von denen der eine durch einen Bund (13) an der Stellstange (3) gebildet ist, der gegen eine vom Gehäuse (1) gebildete Außenseite einer Umfassung (6) der Stellstange (3) in Anlage bringbar ist, **dadurch gekennzeichnet, dass** der andere Anschlag durch von der Stellstange (3) radial abstehende Rastfedern (9) gebildet ist, die gegen die Innenseite der Umfassung (6) in Anlage bringbar sind.

2. Stellstange nach Anspruch 1, **dadurch gekennzeichnet, dass** die Anschläge (9, 13) Bestandteile einer die Stellstange (3) umfassenden und mit dieser fest verbundenen Hülse (7) sind.

3. Stellstange nach Anspruch 1 oder 2, **dadurch gekennzeichnet, dass** die Rastfedern (9) mit ihrer gegen die Innenseite der Umfassung (6) auflaufenden Fläche (15) derart gestaltet sind, dass die Rastfedern (9) beim Auflaufen in ihrer radial nach außen weisenden Lage gehalten werden.

4. Stellstange nach Anspruch 3, **dadurch gekennzeichnet, dass** die Rastfedern (9) derart schräg verlaufen, dass sie beim Auflaufen radial nach außen gedrückt werden.

5. Stellstange nach Anspruch 3, **dadurch gekennzeichnet, dass** die Rastfedern (9) als Haken ausgebildet sind und die Umfassung (6) einen beim Auflaufen der Haken eingreifenden axialen Vorsprung (17) greifen.

6. Stellstange nach einem der Ansprüche 1 bis 3, **dadurch gekennzeichnet, dass** auf die Stellstange ein Ring aufgesetzt ist, der sich beim Auflaufen der Rastfedern gegen die Innenseite der Umfassung hinter die Rastfedern setzt.

7. Stellstange nach einem der Ansprüche 2 bis 6, **dadurch gekennzeichnet, dass** die Hülse (7) einen Längssteg (10) aufweist, der zur Verdrehsicherung in eine Ausnehmung (11) in der Umfassung (6) passt.
